# EUROPEAN PATENT SPECIFICATION

(11) **EP 2 273 238 B1**
(45) Date of publication and mention of the grant of the patent: **23.09.2020**
(21) Application number: 10166296.3
(22) Date of filing: 17.06.2010
(51) Int. Cl.: G01D 5/244, G01D 3/08

(54) **A method for operating an encoder system and an encoder system**
Verfahren zum Betreiben eines Encodersystems und Encodersystem
Procédé d'utilisation d'un système d'encodeur et système d'encodeur

(30) Priority: 09.07.2009 SE 0950542
(43) Date of publication of application: 12.01.2011
(73) Proprietor: LEINE & LINDE AB, 645 21 Strängnäs (SE)
(72) Inventor: Johnson, Magnus, 632 39, Eskilstuna (SE); Gustafsson, Fredrik, 645 42, Strängnäs (SE); Thorsander, Ulf, 155 34, Nykvarn (SE); Söderroos, Sune, 644 30, Torshälla (SE)
(74) Representative: Zacco Sweden AB

(56) References cited:
- WO-A2-2004/078543
- DE-A1-102006 029 495
- DE-A1-102007 036 271
- GB-A- 2 127 554
- JP-A- 2009 063 412
- US-A- 5 608 845

## Description

### Field of the invention

The present invention relates to a method for operating an encoder system and an encoder system. In particular the invention relates to condition based calculation of the remaining lifetime of the encoder system.

### Background of the invention

The rotary encoder is an important sensor commonly used in closed loop velocity control and positioning applications within industrial applications, for example in plants for paper or steel making in which the encoder may be arranged to detect rotary movement of a machine shaft. In general, rotary encoders comprise a detector part which detects rotary motion and generates a signal corresponding to the detected angular position change. Different values, such as angular velocity and number of revolutions may be derived from the signal. The rotary encoders further comprises means, such as a bearing for attaching the encoder to the shaft of the machine whose movement is to be detected as well as means for attaching the casing of the sensor to the casing of the machine.

There are several different types of rotary encoders, for example optoelectrical encoders as described in EP 1480344. This type of encoder includes an encoding disc that has an optically readable pattern. The disc pattern is read by one or more detectors which each deliver an electric signal in relation to the amount of light that is received in the detector, so that movement of the encoding disc in relation to the detector will be indicated by changes in the electric signal.

There are also other types of rotary encoders based on other measurement principles such as magnetic, inductive or capacitive encoders. EP1983307 describes a magnetic encoder, an inductive encoder is described in US7190158 and a capacitive encoder is described in DE102006056609.

One problem related to rotary encoders is that the encoders are used in environments which cause different types of wear to the encoder. Due to the wear that the encoder is subjected to the condition of the encoder degrades which in turn may lead to malfunctioning of the encoder. A faulty encoder could lead to unscheduled stops of machines or plants for service or replacement of parts. This is disadvantageous since it leads to costly drops in production.

It is known in the art to monitor the condition of encoders. The optical encoder described in EP1480344 comprises a circuit that provides a warning signal when the optical disc of the encoder is contaminated. The user is then informed that the encoder needs service. However, although proven useful, the encoder described in EP1480344 does not provide the user with complete information of the status of the encoder.

DE102007036271 describes a rotary encoder in which the remaining lifetime of the encoder is calculated by counting and subtracting the performed revolutions from a reference value corresponding to maximum number of revolutions. In the calculation factors which inflict the wear of the encoder, such as temperature and vibrations may be considered by the use of characteristic diagrams. The method described in DE102007036271 is limited to calculating the remaining lifetime of the encoder in relation to the status of the encoder bearing. No consideration is taken to the condition of other critical parts. In the described method it is further complicated to consider the combined effect of several factors on the remaining lifetime of the encoder.

GB 2127554 A describes monitoring, by measuring apparatus, the existing condition of motor vehicle parts prone to wear, e.g. brake and clutch linings, in order to determine the time or distance at which a motor vehicle should be serviced. These measured values are fed to a computer in which they are multiplied by weighting factors depending on the load. The computer calculates the length of life to be expected of the motor vehicle parts by comparison of the preexisting wear with a predetermined wear and value and indicates the same on an indicating apparatus.

WO 2004/078543 A2 relates to a method for determining maintenance intervals for motor vehicle modules which comprise at least one maintenance unit. Each maintenance unit is associated with an amount of damage, whose the value increases during the operation of the motor vehicle. The load acting upon a maintenance unit is determined or estimated from operational data of the vehicle or from one part of said data in a selected time interval and divided into different categories of a load pattern. The increase in total damage for said time interval is calculated by subsequently comparing the load pattern of a time interval with stored data of the breakdown behaviour of the maintenance unit. The end of the maintenance interval for a maintenance unit is then achieved when the associated total damage exceeds a specific critical threshold value.

Thus, it is an object of the present invention to provide a simple and reliable method for calculating the remaining lifetime of the encoder. A further object is to achieve an improved encoder which enables the user to prevent unscheduled stops of the process that the encoder is controlling.

### Summary of the invention

This object is achieved by a method for operating an encoder system characterized by the steps of:
- determining a value of a first encoder operational variable;
- weighting said value in dependence of at least one other operational variable of the encoder, influencing the lifetime of the encoder;
- providing a reference value of total encoder lifetime in respect of said first encoder operational variable;
- calculating the remaining lifetime of the encoder in respect of the first operational variable based on the weighted value and the reference value of total encoder lifetime wherein, weighting values are predetermined for intervals of the operational variable influencing the lifetime of the encoder whereby, the weighting value for the operational variable in question corresponds to the interval in which a sampled value of the operational variable falls within
- whereby the remaining lifetime of several specific parts of the encoder system are calculated and the remaining lifetime of the encoder system is set to the remaining lifetime of the specific part which has the shortest remaining lifetime.

The method is characterized in that operational variables influencing the lifetime of the encoder are sampled during measurement cycles that are continuously repeated. The calculation of remaining lifetime is done in different ways in dependence of the part as described below.

By the method, the remaining lifetime of the encoder system may accurately be calculated for different critical parts of the encoder. The use of intervals, to which a weighting value is associated, minimizes the number of weighting values that needs to be determined. The use of intervals associated with weighting values makes it easy to consider the combined effect of several factors which each influences the remaining encoder lifetime. Thereby is an effective and reliable method for calculation of the remaining lifetime of the encoder system achieved.

Preferably, the operational variable of the encoder is any of at least running time (t), rotated distance (d), diagnostic signal (S), storage time (st), temperature (T), vibration (a) and angular velocity (v).

Preferably, the interval of the operational variable which influences the lifetime of the encoder is representative for the conditions of an application in which the encoder is installed.

Preferably, the weighting value is any of a temperature dependent weighting value (λ), an angular velocity dependent weighting value (K) or a vibration dependent weighting value (α).

According to one alternative, the remaining lifetime of at least one specific part of the encoder system is calculated, wherein the remaining lifetime of the encoder system is set to the remaining lifetime of said specific part.

According to one alternative, the specific part is a mechanical part of the encoder system.

According to one alternative, the specific part is an electronic and/or optical part of the encoder system.

Preferably, the remaining lifetime of several specific parts of the encoder system are calculated and the remaining lifetime of the encoder system is set to the remaining lifetime of the specific part which has the shortest remaining lifetime.

According to one alternative, the calculation of remaining lifetime of an electronic part comprises the steps of: sampling a value of encoder temperature (T) and a time period (Δt); associating the time period (Δt) with a predetermined temperature interval (ΔT); corresponding to the sampled temperature value (T); providing, based on the predetermined temperature interval (ΔT), a temperature dependent weighting value (λ); multiplying the time period (Δt) with the temperature dependent weighting value (λ), thereby achieving the effective running time (N_{eff}) of the encoder; providing a reference value (N_{ref}) of total lifetime of the encoder corresponding to maximum running time at nominal conditions; calculating the remaining lifetime (Nᵣₑₘ) of the encoder by subtracting the effective running time (N_{eff}) from the lifetime reference value (N_{ref}).

According to one alternative, the calculation of remaining lifetime of a mechanical or electronic part of the encoder comprises the steps of: sampling at least one value of angular velocity (v), one value of rotated distance (d) and a value of encoder temperature (T); associating the sampled value of angular velocity with a predetermined velocity interval (Δv); corresponding to the sampled velocity value (v); providing, based on said velocity interval, a velocity dependent weighting value (K); multiplying the sampled value of encoder distance (d) with the velocity dependent weighting value (K), thereby achieving a weighted distance value (dK); associating the weighted distance value (dK) with a predetermined temperature interval (ΔT); corresponding to the sampled temperature value (T); providing, based on said temperature interval, a temperature dependent weighting value (λ); multiplying the weighted distance (dK) with the temperature dependent weighting value (λ), thereby achieving the effective distance (N_{eff}) of the encoder; providing a reference value (N_{ref}) of total lifetime of the encoder corresponding to maximum rotated distance at nominal conditions; calculating the remaining lifetime (Nᵣₑₘ) of the encoder by subtracting the effective distance (N_{eff}) from the lifetime reference value (N_{ref}).

According to one alternative, the calculation of remaining lifetime of a mechanical or electronic part of the encoder comprises the steps of: sampling acceleration values (a₁, a₂, a₃...aₙ) from an acceleration sensor disposed on the encoder at discrete times (t₁, t₂, t₃...tₙ) of a time period (Δt); determining a frequency spectrum with the acceleration amplitude of each of the frequencies f₁, f₂, f₃... fₙ from the sampled acceleration values; associating each frequency with a predetermined acceleration amplitude interval (Δa); providing, based on the selected acceleration intervals acceleration amplitude dependent weighting values (α); multiplying each frequency (f) of the spectrum with the corresponding acceleration amplitude dependent weighting value (α); summing the weighted frequencies and multiplying the summed frequencies with the time period (Δt), thereby achieving the sum of stress cycles (Nᵢ) the encoder is subjected to; associating the sampled temperature value with a predetermined temperature interval (ΔT); providing, based on the selected temperature interval a temperature dependent weighting value (λ); multiplying the weighted frequency sum (Nᵢ) with the temperature dependent weighting value (λ), thereby achieving the effective amount of stress cycles (N_{eff}) of the encoder; providing a reference value (N_{ref}) of total lifetime of the encoder corresponding to the maximum number of stress cycles that the encoder may be subjected to under nominal condition; calculating the remaining lifetime (Nᵣₑₘ) of the encoder by subtracting the effective distance (N_{eff}) from the lifetime reference value (N_{ref}).

According to one alternative, the calculation of remaining lifetime of the detector unit of the encoder comprises the steps of: sampling values of angular velocity (v₁, v₂, v₃... vₙ), values of diagnostic signal (si, s₂, s₃... sₙ) and values of encoder temperature (T₁, T₂, T₃... Tₙ) at discrete times t₁, t₂, t₃...tₙ of the running time signal; associating the sampled diagnostic value with a predetermined temperature interval (ΔT); corresponding to the sampled temperature value (T); providing, based on the selected temperature interval, a temperature dependent weighting value (λ); multiplying the sampled value of diagnostic signal (s) with the temperature dependent weighting value (λ), thereby achieving a weighted diagnostic signal value (sλ); associating the weighted diagnostic signal value (sλ) with a predetermined velocity interval (Δv) corresponding to the sampled velocity value (v); providing, based on the selected velocity interval, a velocity dependent weighting value (K); multiplying each weighted diagnostic signal value (sλ) with the velocity dependent weighting value (K), thereby achieving effective diagnostic signal value (s'); calculating the remaining lifetime (Nᵣₑₘ) of the encoder by the rate that the effective diagnostic signal values (s') decrease to a predetermined level Sc.

According to one alternative, the calculation of remaining lifetime of an electronic part of the encoder comprises the steps of: sampling at least a temperature value (T) over storage time period (Δt); associating the time period (Δt) with a predetermined temperature interval (ΔT) corresponding to the temperature value (T); providing, based on the selected temperature interval, a temperature dependent weighting value (λ); multiplying the storage time period (Δt) with the temperature dependent weighting value (λ), thereby achieving the effective storage time (N_{eff}) of the encoder ; calculating the remaining lifetime (Nᵣₑₘ) of the encoder by subtracting the effective storage time (N_{eff}) from the lifetime reference value(N_{ref}).

The invention also relates to an encoder system comprising a detection unit for detecting movement, a signal processing unit for generating a signal on basis of the detected movement and a computer processor unit and at least one state sensor for providing values of operational variables of the encoder characterized by
- a lifetime calculation unit comprising a database in which is stored: reference values for encoder lifetime under nominal operating conditions, predetermined intervals for operating variables which influences the lifetime of the encoder, weighting values; and a memory for storing sampled values and a calculation unit; wherein the life time calculation unit is arranged to calculate the remaining life time of the encoder according to the above-charcterized methods.

The encoder system may thereby advantageously provide the user of the encoder system with information on how long the encoder system still can operate under determined operational variables before service or replacement of the encoder system is needed. Unscheduled stops of the machine in which the encoder system is installed can thereby be avoided, which in turn provides for a more secure and cost effective process. A further advantage is that the stopping of the machine for service or replacement of the encoder system can be optimized since the user may schedule the service or replacement stops such that they do not interfere with the normal running of the process.

Preferably, the encoder system comprises a rotary encoder comprising a detection unit for detecting rotary movement, or a linear encoder comprising a detection unit for detecting linear movement.

### Brief description of the drawings

Figure 1 shows schematically an encoder system according to a preferred embodiment of the invention.
Figure 2 describes schematically the general steps of a method according to the invention for operating an encoder.
Figures 3a and 3b schematically describes the steps of determining the remaining lifetime of an encoder based on the rotated distance of the encoder at different angular velocities and temperatures.
Figures 4a and 4b schematically describes the steps of determining the remaining lifetime of an encoder based on the running time of the encoder at different temperatures.
Figures 5a and 5b schematically describes the steps of determining the remaining lifetime of an encoder based on the stress cycles that the encoder is subjected to.
Figures 6a and 6b schematically describes the steps of determining the remaining lifetime of an encoder based on the quality of the scanning signal of the encoder.
Figures 7a and 7b schematically describes the steps of determining the remaining lifetime of an encoder based on the storage time of the encoder at different temperatures.
Figure 8 schematically describes the steps of determining the total remaining lifetime of the encoder.

### Description of embodiments

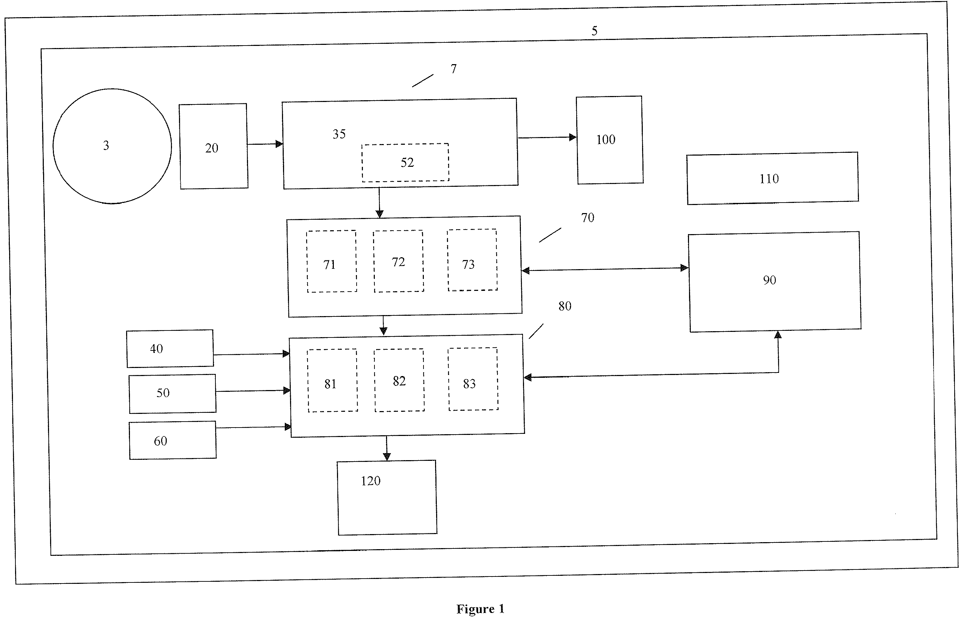

Figure 1 describes schematically an encoder system 5 according to a first preferred embodiment. The encoder system may be based on any type of measurement principle, for example optoelectrical, magnetic, inductive, and capacitive. The system described in figure 1 is a rotary encoder system which comprises a rotary encoder for detecting rotary movement. However the system could also be a linear encoder system comprising a linear encoder for detecting linear movement.

The encoder system 5 comprises a mechanical attachment means 3 for attaching the system to a rotating shaft of e.g. a machine. The mechanical attachment means 3 may for example be a bearing. According to one alternative the bearing is arranged such that the shaft of the machine is pushed through the bearing so that the encoder system hangs on the shaft of the machine. According to another alternative a small shaft extends from a bearing located inside the encoder system whereby the shaft is attached to the end surface of the shaft of the machine.

A first part 7 of the encoder system 5 has the purpose of detecting rotary movement and to generate signals corresponding to the detected position change. This part of the encoder system, generally known as an encoder, is known in the art and will therefore only be briefly described. Generally, part 7 for detecting rotary movement comprises a detection unit 20 which detects rotary movement of the shaft of the machine and produces signals in relation thereto. The detection unit 20 may be of any type of measurement principle, for example optoelectrical, magnetic, inductive or capacitive. Part 7 further comprises a signal processing unit 35 for processing the signals from the detection unit 20 into signals corresponding to a specific change of angular position of the shaft of the machine whose movement is detected. In the case of an optoelectrical encoder system a square-wave signal is generated in the signal processing unit 35.

A diagnostic unit 52 may be comprised in the signal processing unit 35. The diagnostic unit 52 detects how the quality of the signal from the detector unit 20 decreases over time. The diagnostic unit 52 outputs a signal S corresponding to the difference between the maximum signal Sₘₐₓ of a faultless encoder and the maximum signal from the present encoder. For example, in a faultless optoelectrical encoder system the signal will have a voltage swing ΔU with the maximum amplitude Uₘₐₓ. Should the detector unit 20 of the encoder degrade, for example due to aging of the electronic circuits, the amplitude of the voltage swing of the signal will decrease. The diagnostic unit 52 outputs a signal corresponding to the difference between Uₘₐₓ and the present maximum voltage of the signal from the detector unit 20.

The encoder system further comprises a computer processor unit 70 which comprises a processor means 71, a non-volatile memory 72 and a time counter unit 73. The encoder system also comprises a communication interface 90 for the transmitting and receiving of information between the encoder and a remote receiver/sender unit (not shown), for example a remote computer device. The encoder system further comprises a power supply 110.

The signals relating to detected position change from the signal processing unit 35 and the signal from the diagnostic unit 52 are transmitted to the computer processing unit 70. Based on the signals from the signal processing unit 35 and the time counter unit 73 the computer processing unit 70 may determine values for various operation variables of the encoder, for example values of running time, which is the time counted from a starting point for example the installation of the encoder including both the time that the encoder system is rotating or standing still. Other operation variables include rotated distance, angular velocity, diagnostic signal and number of revolutions.

The encoder system further comprises one or several state sensors 40, 50, 60 for measuring further operational variables of the encoder system. The state sensors may be internal sensors which are arranged within the casing of the encoder system. The sensors may also be external sensors which are arranged outside the encoder system. When arranged outside the encoder system the signals from the state sensors may be transmitted either by wire or wireless means e.g. radio. The sensors could be arranged at any suitable position in the encoder, for example the acceleration sensor could be arranged close to the mechanical attachment part. The state sensors include one or several of the following sensors:
- a time sensor such as a Real Time Clock, (RTC) 40. The RTC 40 indicates calendar time e.g. in a format of seconds, minutes, hours, days, months and years. The time of the RTC 40 is read upon manufacturing of the encoder and stored in the memory of the encoder. Thereby, the time lapsed since the manufacture of the encoder may be determined.
- an accelerometer sensor 50 for detecting vibrations or shocks that the encoder is subjected to during operation. The vibrations or shocks may be direct i.e. generated by the encoder or indirect i.e. the vibrations and shocks of the machine parts. The accelerometer sensor 50 detects vibrations or shocks as accelerations along an x-axis, a y-axis and a z-axis which are perpendicular to each other. The accelerometer sensor 50 is for example a mems-type sensor or a gyroscope.
- a temperature sensor 60 for detecting the temperature that the encoder is subjected to. The temperature sensor 60 could for example be a thermocouple or a ptc-type sensor.

Other types of sensors may also be comprised in the encoder system. For example, a hygrometric sensor, or sensors which detect various electrical parameters.

The encoder system further comprises a lifetime calculation unit 80. The lifetime calculation unit 80 is arranged such that it receives values relative encoder operational variables, i.e. rotated distance, running time, angular velocity, diagnostic signal amplitude, total running time, number of revolutions, temperature and vibrations.

The purpose of the lifetime calculation unit 80 is to calculate for how long the encoder system still can function before service or replacement of the encoder system or parts thereof is necessary, thus the remaining lifetime of the encoder.

By "total encoder lifetime" or "remaining encoder lifetime" is intended the lifetime of the encoder in respect of an operational variable. For example, the encoder lifetime may be expressed as the total distance that the encoder can rotate before failing, or the total amount of time that the encoder can be operated before failing, or the total number of stress cycles, a measure of vibrations that the encoder can be subjected to before failing. The "remaining lifetime of the encoder" may for example be expressed in the same way, e.g. as the remaining distance that the encoder can rotate before failing.

The lifetime calculation unit 80 comprises a database 81, a calculation unit 82, which may be a computer processor and a memory means 83. The database 81 contains reference values corresponding to observed maximum lifetime of specific parts of encoders that have been run under nominal operation variables. The parts may be mechanical parts which are critical for the function of the encoder system, e.g. the encoder bearing 3 or critical electronic and/or optical parts such as the detector unit 20, the signal processing unit 35 or the computer processing unit 70. The database 81 also contains intervals for operational variables which influence the lifetime of the encoder. The database 81 further contains weighting values for the critical parts mentioned above. The lifetime reference values, the intervals and the weighting values are important for calculating the remaining life time of the encoder and will be described in detail below. In the memory means 83 are values of operational variables stored during operation of the encoder. The calculation unit 82 is arranged, thus comprise preset instructions and/or conditions, to calculate the remaining life time of the encoder based on the sampled values and on the information which is stored in the database 81 on lifetime reference values, intervals for operational variables and the weighting values.

The remaining lifetime of the encoder is presented to the operating person of the encoder on a presentation means 120. The presentation may for example be a LCD-display or one or several light emitting diodes (LED). Alternatively, the remaining lifetime is transmitted to a remote location, for example a remote server through the encoder communication interface 90.

The different parts of the encoder system that have been described above may be comprised in a single unit. In this case the different parts of the encoder system are comprised within the casing of the encoder system.

According to an alternative, some of the parts of the encoder system may be arranged at a location remote from the detecting means of the encoder system. For example, the computer unit 70 and/or the lifetime calculation unit 80 may be arranged in a control room distant from the detecting means 20 and the signal processing unit 35.

Following is described in detail how the lifetime of the encoder is calculated.

### Determination of encoder lifetime

In operation an encoder is subjected to various operational variables which influence the lifetime of the encoder. For example running time, temperature, angular velocity, rotated distance, running time or vibrations. These operational variables typically relate to the machine or process that the encoder is installed in.

The inventors have noted that various operational variables or combinations thereof have different impact on the wear of various parts of the encoder and that the lifetime of each part is important in calculating the total lifetime of the encoder. For example:
High temperature was found to affect the lifetime of the mechanical attachment means of the encoder system, such as the encoder bearing 3 on which the encoder is mechanically attached on the rotating shaft of the machine. It was further found that the wear of the encoder bearing increased with the distance that the encoder has travelled at increased angular velocity.

It was found that the electronic and optical parts of the encoder e.g. the detecting means 20, the signal processing means 35 or the computer processor 70 degraded over time when subjected to high temperatures.

The amount of vibrations and shocks that the encoder is subjected to was found to have an impact on the mechanical parts of the encoder as well as to the electronics and the optics of the encoder respectively.

It was found that relationships could be determined between the lifetimes of specific parts of encoders run under nominal operational variables compared to encoders run under operational variables deviating from nominal. It was further found that the relationships could be used as weighting values in a calculation to calculate the total remaining lifetime of any encoder of the same type.

In the calculation, the weighting values are used to transform a sampled value of an operational variable from an encoder which is run at conditions deviating from nominal into an equivalent value for an encoder run under nominal conditions. Following is described how the weighting values are determined.

First, the lifetime of specific parts of newly manufactured encoders was determined. The life time of a specific part was determined by running the encoder under nominal operation conditions until failure of the part. In the case of an electronic part, for example until the signal from the signal processing unit 35 falls below a predetermined value. In the case of a mechanical part until the part has worn out. The lifetime of the different parts of the encoder may also be determined from other sources, such as field observations or data sheets. By "nominal conditions" is meant that the temperature around the encoder was 20°C and that the encoder was subjected to a normal degree of vibrations and contamination and run at a normal velocity.

The lifetime of the parts of the encoder were for example determined as the maximum distance that the encoder had rotated, the maximum running time or the maximum amount of stress cycles that the parts of the encoder could be subjected to before failing. The determined lifetimes of the various parts of the encoder run under nominal conditions was stored as reference values in the database 81 of the lifetime calculation unit 80.

The lifetime was also determined for specific parts of encoders that were run until failure under conditions deviating from nominal. For example, encoders that were subjected to temperatures higher or lower than 20°C for long periods of time, encoders that were run at high angular velocities, encoders that were subjected to vibrations of different frequency intervals during running or standstill, encoders that were run in environments containing varying degree of contamination or encoders that had been kept in storage for varying length of time or encoders that were subjected to combinations of one or several of the aforementioned conditions.

The lifetime of the specific parts of an encoder that had been run under nominal conditions was then compared to the lifetime of specific parts of an encoder that had been run at conditions deviating from nominal. The result of the comparison corresponds to the impact that the specific condition has on the lifetime of the specific part of the encoder and may be used as a weighting value in the calculation of remaining lifetime of the encoder.

According to one alternative, the weighting values may be derived by dividing the observed lifetime of the encoders described above. The accuracy of the weighting values may further be increased by the incorporation of field observations. The weighting value is stored in a weighting value section of the database 81 of the lifetime calculation unit 80. The weighting values may be in the form of discrete values or in the form of functions.

According to a preferred embodiment the range of an operational variable which influences the lifetime of the encoder is divided into several intervals. One weighting value is then determined for each interval. The intervals may vary in number and their ranges may depend on the application, e.g. the machine that the encoder is installed in. Since the encoder may be installed in different types of applications and subjected to various operation variables, it is preferred that several intervals for several different operational variables are determined. The intervals of the various operational variables and corresponding weighting values are stored together in the database 81 of the lifetime calculation unit 80. Following are examples on how intervals are determined and associated with corresponding weighting values.

For example, the encoder may be operated between a minimum and a maximum temperature i.e. the temperature range of the encoder. The temperature range is divided in a number of intervals ΔT₁, ΔT₂, ΔT₃... ΔTₙ and a temperature dependent weighting value λ₁, λ₂, λ₃ ...is determined for each temperature interval. The weighting value is representative for the temperature of the interval and may for example correspond to a specific temperature value of the interval or to a mean temperature of the interval.

The encoder may also be operated in a specific velocity range. The velocity range is divided in a number of intervals Δv₁, Δv₂, Δv₃ ... Δvₙ and a velocity dependent weighting value K₁, K₂, K₃ ... is determined for each interval. The weighting value is representative for the velocity of the interval and may for example correspond to a specific velocity value of the interval or to a mean velocity of the interval.

The encoder may also be operated in a specific range of vibrations and shocks. The acceleration amplitude range of the vibrations or shocks is divided in a number of intervals Δa₁, Δa₂, Δa₃ ... Δaₙ and an acceleration amplitude weighting value α₁, α₂, α₃ ... is determined for each interval. The weighting value is representative for the acceleration amplitude of the interval and may for example correspond to a specific acceleration amplitude value of the interval or to a mean acceleration amplitude of the interval.

The expression "an encoder" in the cases described above may also be equivalent to a statistic mean value of several encoders that run under similar conditions.

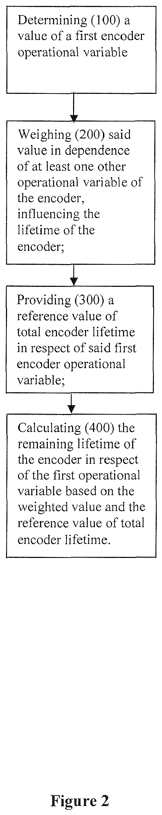

In the following the general steps of the method for operating an encoder system are described with reference to figure 2.

In a first step 100, a value of a first operational variable is determined. The first operational variable may for example be running time, rotated distance, vibrations, storage time or the diagnostic signal of the encoder.

In a second step, 200 the value of the first operational variable is weighted in dependence of another operational variable of the encoder which influences the lifetime of the encoder. The first operational variable may for example be weighted in dependence of temperature, angular velocity or vibrations.

The weighting values are predetermined for intervals of the operational variable influencing the lifetime of the encoder whereby, the weighting value for the operational variable in question corresponds to the interval in which a sampled value of the operational variable falls within.

In a third step, 300 a reference value of total encoder lifetime in respect of the first operational variable is provided. The reference value is for example the total running time, the total rotated distance, the maximum number of stress cycles, total storage time, or a critical level of signal amplitude.

In a fourth one step, 400 the remaining lifetime of the encoder is calculated in respect of the first operational variable based on the weighted value and the reference value of total encoder lifetime.

In the following are concrete embodiments of the method for operating an encoder system described.

### Calculation of remaining lifetime based on the rotated distance, angular velocity and temperature of the encoder

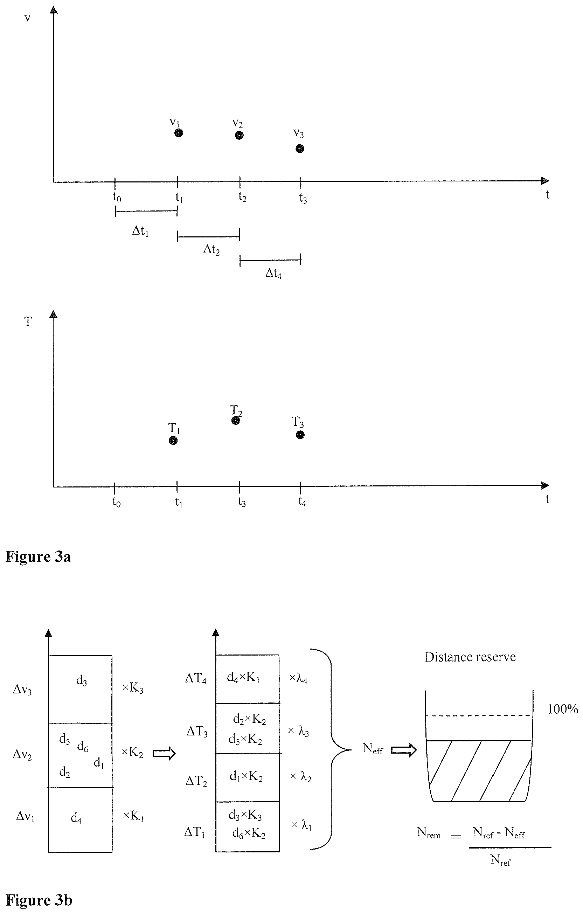

According to one embodiment of the invention the remaining lifetime of the encoder system in relation to its mechanical parts is calculated based on the distance that the encoder has rotated at different angular velocities and temperatures. Figures 3a and 3b schematically describe the steps of the method.

The rotated distance, the angular velocity and the temperature of the encoder are respectively sampled during measurement cycles that are continuously repeated (see figure 3a).

The angular velocity v₁, v₂, v₃... of the encoder is determined from the distance d₁, d₂, d₃... that the encoder has rotated during a measurement cycle Δt₁, Δt₂, Δt₃... . The time length of the measurement cycle is Δtᵢ. The measurement cycles are repeated continuously, i.e. at the end, t₁ of one measurement cycle Δt₁ starts the next measurement cycle Δt₂ (see figure 3a). The temperature T₁, T₂, T₃... of the encoder is also determined for each measurement cycle, e.g. the mean temperature is calculated for the measurement cycle.

The travelled distance d₁, d₂, d₃, the velocity values v₁, v₂, v₃... and the temperature values T₁, T₂, T₃... of the encoder are respectively sampled by the lifetime calculation unit 80 at the end of each measurement cycle Δt₁, Δt₂, Δt₃.... The sampled distances, velocity and temperature values are stored respectively in a distance storage portion, a velocity storage portion, and a temperature storage portion of the memory 83. The discrete times t₁, t₂, t₃ of sampling of the values are stored in a time storage portion of the memory 83.

Each distance d1, d2, d3... is first associated with a predetermined velocity interval Δv₁, Δv₂, Δv₃ which corresponds to the velocity v₁, v₂, v₃... of the encoder over the sampled distance. As described, each predetermined velocity interval corresponds to a segment of the velocity range of the application that the encoder is operated in. For each velocity interval is a velocity dependent weighting value K₁, K₂, K₃ provided, see figure 3b. The weighting values are retrieved from the database 81.

Each distance d₁, d₂, d₃... is then multiplied with the weighting value K₁, K₂, K₃ of the corresponding velocity interval.

Thereafter each weighted distance d₁, d₂, d₃... is associated with a predetermined temperature interval ΔT₁, ΔT₂, ΔT₃, ΔT₄ which corresponds to the temperature of the encoder over the sampled distance. For each temperature interval a temperature dependent weighting value λ₁, λ₂, λ₃, λ₄ is provided. As described, each predetermined temperature interval corresponds to a segment of the temperature range of the application that the encoder is operated in.

Each weighted distance d₁, d₂, d₃... is then multiplied with the corresponding temperature dependent weighting value λ₁, λ₂, λ₃, λ₄.

The weighted distances are then continuously summed to an effective distance Neff which corresponds to the total distance that the encoder would had travelled if it was run at nominal conditions.

Next, the remaining lifetime Nrem of the encoder is determined by subtracting Neff from a reference value, N_{ref}, corresponding to the maximum distance that an encoder can rotate at nominal conditions before its mechanical attachment part fails thus, Nrem = Nref - Neff. It is appreciated that the Neff is subtracted from Nref after each sampling, whereby Nrem is continuously updated. The expected remaining lifetime may be expressed in percent by dividing Nrem by Nref. Thus, (N_{ref}-N_{eff})/N_{ref}.

### Calculation of remaining lifetime based on the running time of the encoder at various temperatures.

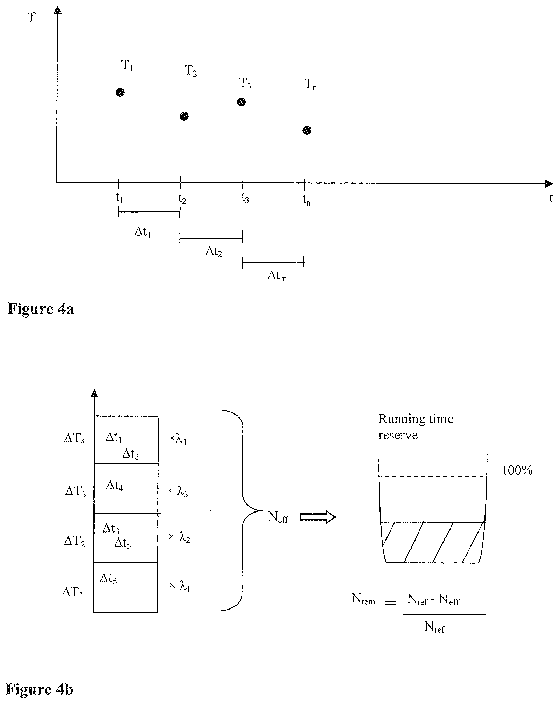

According to another embodiment of the invention the remaining lifetime of the encoder in relation to its electronic or optical parts is calculated based on the time that the encoder is subjected to specific temperatures, the time period is referred to as running time and includes the time that the encoder is in motion and the time that the encoder is not in motion. Figures 4a and 4b schematically describe the steps of the method.

The temperature of the encoder is sampled during measurement cycles that are continuously repeated (see figure 4a). The temperature of the encoder is measured by the temperature sensor 60 and temperature values T₁, T₂, T₃...are sampled at discrete times t₁, t₂, t₃... of the running time signal from the computer processing unit 70 The times are stored in a time storage section of the memory 83 and the temperature values are stored in a temperature storage section of the memory 83.

Sampling of the temperatures is performed continuously. The time period from the beginning of one measurement cycle until the next measurement cycle is Δt₁, Δt₂, Δt₃... (see figure 4a). The encoder system is considered to be at the same temperature from the beginning of one measurement cycle until the beginning of the following measurement cycle.

Each time period Δt₁, Δt₂, Δt₃ ... of the encoder is then associated with the temperature value T₁, T₂, T₃ ... of the encoder at the moment of sampling, thus the times t₁, t₂, t₃... (see figure 4b).

Each time periods Δt₁, Δt₂, Δt₃ ... is then associated with a predetermined temperature interval ΔT₁, ΔT₂, ΔT₃, ΔT₄ which corresponds to the temperature of the encoder over the time period. For each temperature interval a temperature dependent weighting value λ₁, λ₂, λ₃, λ₄ is provided. As described, each predetermined temperature interval corresponds to a segment of the temperature range of the application that the encoder is operated in.

Each time period Δt₁, Δt₂, Δt₃ ... is then multiplied with the corresponding temperature dependent weighting value λ₁, λ₂, λ₃, λ₄.

The weighted time periods are then continuously summed to an effective time period Neff which corresponds to the total operating time of the encoder if it would have been operated at nominal temperature, 20°C.

Next, the remaining lifetime Nrem of the encoder is determined by subtracting Neff from a reference value, N_{ref}, corresponding to the maximum time that an encoder can be operated at nominal conditions before its electronic or optical part fails, thus Nrem = Nref - Neff. It is appreciated that the Neff is subtracted from Nref after each sampling, whereby Nrem is continuously updated. The expected remaining lifetime may be expressed in percent by dividing Nrem by Nref. Thus, (N_{ref}-N_{eff})/N_{ref}.

### Calculation of remaining lifetime based on the amount of stress cycles that the encoder is subjected to.

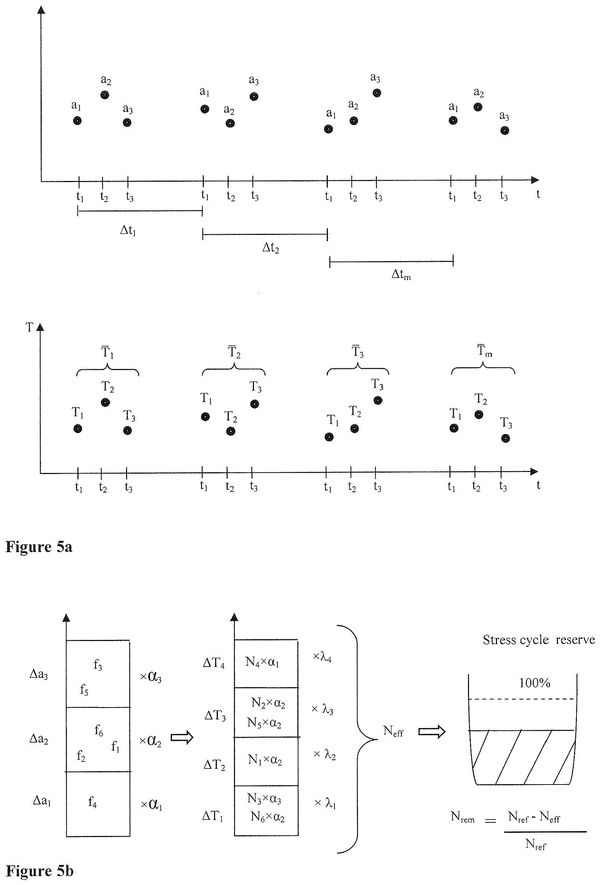

According to a further embodiment of the invention the remaining lifetime of the encoder in relation to its mechanical parts and electronic parts respectively is calculated based on the amount of stress cycles that the encoder is subjected to. Figures 5a and 5b schematically describe the steps of the method.

During running of the encoder the accelerometer sensor 50 detects the vibrations and shocks that the encoder is subjected to and the temperature of the encoder is measured by the temperature sensor 60.

To calculate the number of stress cycles that the encoder is subjected to the acceleration and the temperature is sampled during measurement cycles that are repeated (see figure 5a). During a measurement cycle the acceleration values a₁, a₂, a₃ ... aₙ are sampled at discrete times t₁, t₂, t₃...tₙ of the running time signal from the computer processing unit 70. The total length of the measurement cycle and the time spacing (tj+i-tj) between samples should be selected such that high enough resolution for the Fast Fourier Transform (FFT) is achieved. The time spacing between the samples (tⱼ₊₁-tⱼ) is constant in this case. At least one temperature value, Tᵢ is also sampled during each measurement cycle. The index "i" corresponds to the present measurement cycle (i=1, 2, 3 ... m).

Since the total time of a measurement cycle is short, normally corresponding to only a few rotations of the encoder, it is normally enough to sample the temperature only once for each measurement cycle. However, to increase accuracy it is also possible to sample several temperature values and calculate a mean temperature for the measurement cycle. The sampled time intervals, the acceleration values and the temperature value of each measurement cycle are stored respectively in a time storage section, an acceleration storage section and a temperature storage section of the memory 83. The sampling of acceleration and temperature values is then repeated after a predetermined time Δtᵢ, which is the time elapsed from the beginning, t₁ of one measurement cycle until the beginning t₁ of the next measurement cycle, (see figure 5a).

The acceleration values a₁, a₂, a₃ ... aₙ that have been sampled during a measurement cycle are then transformed into a frequency spectrum by Fast Fourier Transform (FFT).

The effective number of stress cycles during time t₁ to tₙ of a measurement cycle is then determined by using the frequency spectrum.

The FFT gives the amplitude (acceleration amplitude) of each discrete frequency in the measurement cycle.

Each acceleration amplitude ã₁, ã₂, ã₃ ...ã_{ñ} and the corresponding frequency, f₁, f₂, f₃ ... f_{ñ} is then associated with a corresponding acceleration amplitude interval Δa₁, Δa₂, Δa₃. For each interval an acceleration amplitude weighting value α₁, α₂, α₃ is provided. As described, the acceleration amplitude interval corresponds to a segment of the acceleration amplitude range of the application that the encoder may be operated in (see figure 5b).

Next, each frequency from the spectrum is multiplied with the weighting value for the corresponding acceleration amplitude interval and the weighted frequencies are then summed together. The encoder system is considered to be in the same state of stress cycles and temperature from the beginning of one measurement cycle until the beginning of the following measurement cycle, i.e. the period Δtᵢ. The sum of the weighted frequencies of one measurement cycle is therefore multiplied with the time Δtᵢ until the beginning of the next measurement cycle.

The result of the calculation above is denoted Nᵢ and corresponds to the stress cycles that the encoder is subjected to until a second measurement cycle.

Each sum of weighted frequencies Nᵢ is then associated with a predetermined temperature interval ΔT₁, ΔT₂, ΔT₃, ΔT₄ which is selected based on the sampled temperature over the measurement. For each temperature interval a temperature dependent weighting value λ₁, λ₂, λ₃, λ₄ is determined. As described, the predetermined temperature interval corresponds to segments of the temperature range that the encoder may be operated in. Each weighted frequency sum N₁, N₂, N₃ ... is then multiplied with the corresponding temperature dependent weighting value λ₁, λ₂, λ₃, λ₄.

The weighted frequencies are then continuously summed to an effective amount of stress cycles Neff corresponding to the total amount of stress that the encoder would had been subjected to, if it had been run under nominal conditions.

Next, the remaining lifetime Nrem of the encoder is determined by subtracting Neff from a reference value, N_{ref} corresponding to the maximum amount of stress cycles that an encoder run at nominal conditions can be subjected to before failing, thus Nrem = Nref - Neff. It is appreciated that the Neff is subtracted from Nref after each sampling, whereby Nrem is continuously updated. The expected remaining lifetime may be expressed in percent by dividing Nrem by Nref. Thus, (N_{ref}-N_{eff})/N_{ref}.

### Calculation of remaining lifetime based on the quality of the angular position signal

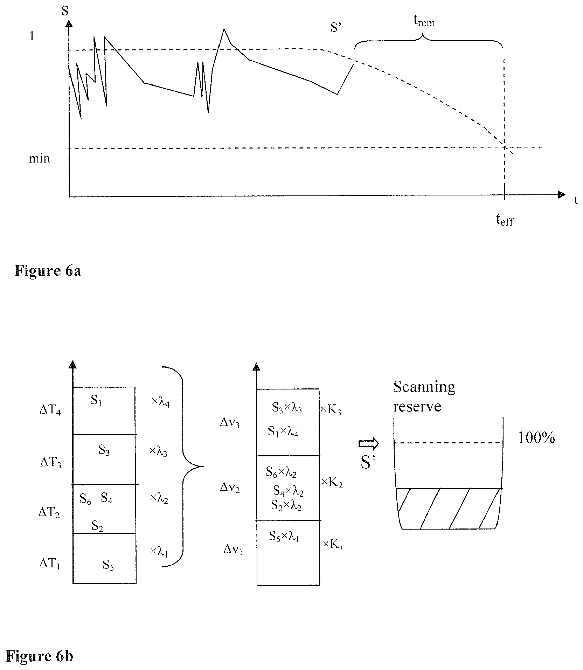

According to a further embodiment of the invention the remaining lifetime of the encoder in relation to its detection unit may be determined based on the signal from the diagnostic unit 52. Figures 6a and 6b schematically describe the steps of the method. The remaining lifetime in this aspect is based on the efficiency of the scanning unit and depends momentarily on the temperature and the angular velocity. The long time degradation depends on time, but it is also affected by temperature and its time derivate. It is a monotonously decreasing function of time, whereas the short term dependency is a fluctuation with temperature and velocity, see figure 6b.

Diagnostic signal values S₁, S₂, S₃ ... are sampled at discrete times e.g. t₁, t₂, t₃... from the signal from the diagnostic unit 52. Sampling is performed by the lifetime calculation unit 80 at the discrete times from the running time signal from the computer processing unit 70. The signal values are stored in a signal storage portion of the memory 83 of the life time calculation unit 80. The sampled time values are stored in a time storage section of the memory.

The temperature of the encoder is measured by the temperature sensor 60 and temperature values T₁, T₂, T₁... are sampled during the same discrete times t₁, t₂, t₃... as the signal amplitude values stored in the memory 83. The temperature values are stored in a temperature storage section of the memory 83.

Each signal value S₁, S₂, S₃... is then associated with the temperature value T₁, T₂, T₃ ... of the encoder at the moment of sampling, thus the times t₁, t₂, t₃...

As shown schematically in Fig. 6b each signal value S₁, S₂, S₃... is then associated with a predetermined temperature interval ΔT₁, ΔT₂, ΔT₃, ΔT₄ which corresponds to the temperature of the encoder at time of the sampling of the signal value. For each temperature interval is a temperature dependent weighting value λ₁, λ₂, λ₃, λ₄ determined. As described, the predetermined temperature interval corresponds to segments of the temperature range of the application that the encoder may be operated in. Each signal value S₁, S₂, S₃... is then multiplied with the corresponding temperature dependent weighting value λ₁, λ₂, λ₃, λ₄.

Each weighted signal value S₁λ₁, S₂λ₂, S₃λ₃ ... is then associated with a predetermined velocity interval Δv₁, Δv₂, Δv₃ which corresponds to the velocity v₁, v₂, v₃... of the encoder at the time of sampling of the signal value. For each velocity interval a velocity dependent weighting value K₁, K₂, K₃ is determined.

Each weighted signal value S₁λ₁, S₂λ₂, S₃λ₃ is then multiplied with the corresponding velocity dependent weighting value K₁, K₂, K₃, K₄.

Thereby the signal from the diagnostic unit of the encoder at different temperatures and angular velocities is transformed into equivalent values for an encoder that has been run at nominal temperature and velocity.

The rate by which the weighted signal values S₁, S₂, S₃... of the encoder decrease is then determined. For example may the weighted amplitude values be plotted against time in a graph as described in figure 6a. A suitable function which is characteristic for the encoder system may be fitted to the sampled values. The remaining time teff until the weighted signal amplitude difference decreases below a predetermined critical level S_{c} may then be determined from the decrease rate of the function. The critical level is a reference value corresponding to the minimum signal value that may be accepted and is retrieved from the database 81. The remaining time to the critical level corresponds to remaining encoder lifetime based on the quality of the signal from the detection means 20 and may be normalized with a corresponding nominal value to a number in percent of expected remaining lifetime.

### Calculation of remaining lifetime based on the storage time and temperature of the encoder

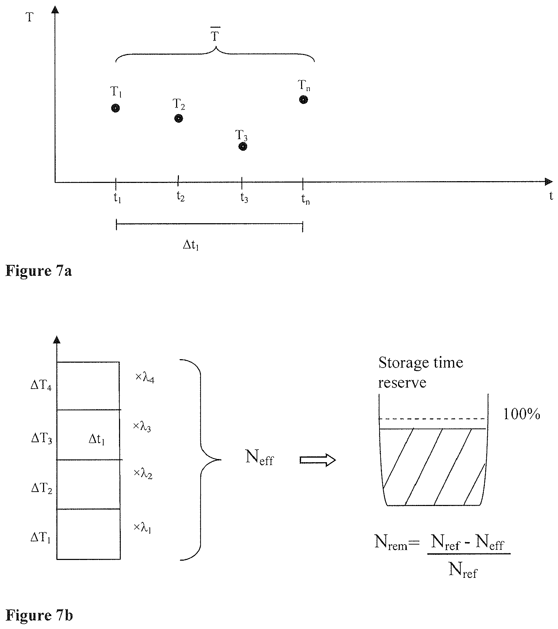

According to a further embodiment of the invention the remaining lifetime of the encoder in relation to its electronic parts is calculated based on the time that the encoder is stored at specific temperatures. Figures 7a and 7b schematically describe the steps of the method.

The time that the encoder is kept in storage is determined by the time lapsed from the moment, t₁ that the encoder is disconnected from the power supply until the moment t₂ when the encoder is reconnected to the power supply. The disconnection is indicated as a disruption in the signals from the computer processing means and is sampled and stored by the life time calculation unit. The time moments t₁ and t₂ are determined by the RTC 40 and are sampled by the lifetime calculation unit 80 and then stored in a time storage portion of the memory 83. The temperature T₁, T₂, T₃... of the encoder during storage is measured by a temperature sensor. When the encoder is reconnected to the power supply the measured temperature values T₁, T₂, T₃... are sampled by the lifetime calculation unit 80 and stored in a temperature portion of the memory 83.

A storage time period Δt₁ (see figure 7a) of the encoder is then determined from the specific time t₁ that the encoder is disconnected from the power supply and the specific time t₂ that the encoder is reconnected to the power supply. The time period Δt₁ is then associated with a temperature value that reflects the temperature conditions under the storage time period Δt₁. The temperature value may for example be a mean value of the sampled temperature values T₁, T₂, T₃...

The time period Δt₁ is then associated with a predetermined temperature interval ΔT to which a temperature dependent weighting value λ is associated. The weighting value is retrieved from the database 81. The time period Δt₁ is then multiplied with the corresponding temperature dependent weighting value λ.

Thereby the time period in storage that the encoder has been has been subjected to different temperatures is transformed into an equivalent time period Neff for an encoder that has been kept at nominal temperature, 20°C. The effective time period Neff corresponds to the total storage time of the encoder if it would have been kept at storage at nominal temperature.

Next (see figure 7b), the remaining lifetime Nᵣₑₘ of the encoder is determined by subtracting Neff from a reference value, N_{ref}, corresponding to the maximum time that an encoder can be kept at storage at nominal conditions before its electronic or optical part fails, thus Nrem = Nref - Neff (see figure 7b). The expected remaining lifetime may be expressed in percent by dividing Nᵣₑₘ by N_{ref}. Thus, (N_{ref}- N_{eff})/N_{ref}.

### Calculation of the remaining lifetime of the encoder system.

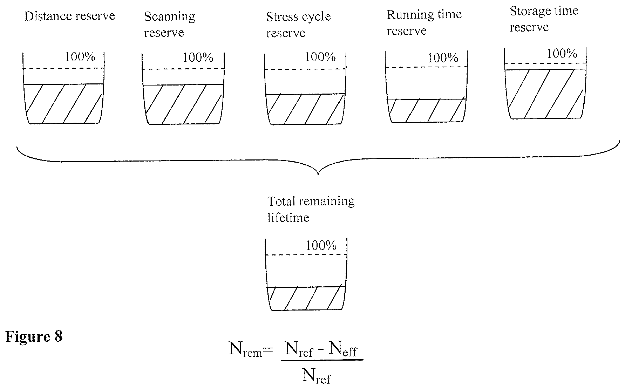

According to one embodiment of the invention (see figure 8) the remaining lifetime of the encoder system is determined by comparing the calculated lifetime of each part of the encoder and selecting the part with the shortest remaining lifetime. Thus, the total remaining lifetime of the encoder is set equal to the remaining lifetime of the part with the shortest remaining lifetime. The remaining lifetime of each part is determined in accordance with the previously described embodiments of the invention.

## Claims

1. A method for operating an encoder system comprising the steps of:
determining (100) a value of a first encoder operational variable;
weighting (200) said value in dependence of at least one other operational variable of the encoder, influencing the lifetime of the encoder;
providing (300) a reference value of total encoder lifetime in respect of said first encoder operational variable;
calculating (400) the remaining lifetime of the encoder in respect of the first operational variable based on the weighted value and the reference value of total encoder lifetime wherein;
weighting values are predetermined for intervals of the operational variable influencing the lifetime of the encoder whereby, the weighting value for the operational variable in question corresponds to the interval in which a sampled value of the operational variable falls within;
whereby the remaining lifetime of several specific parts of the encoder system are calculated and the remaining lifetime of the encoder system is set to the remaining lifetime of the specific part which has the shortest remaining lifetime, **characterized in that**
operational variables influencing the lifetime of the encoder are sampled during measurement cycles that are continuously repeated,
the calculation of remaining lifetime of an electronic part of the encoder comprises the steps of:
sampling a value of encoder temperature (T) and a time period (Δt);
associating the time period (Δt) with a predetermined temperature interval (ΔT); corresponding to the sampled temperature value (T);
providing, based the predetermined temperature interval (ΔT), a temperature dependent weighting value (λ);
multiplying the time period (Δt) with the temperature dependent weighting value (λ), thereby achieving the effective running time (N_{eff}) of the encoder;
providing a reference value (N_{ref}) of total lifetime of the encoder corresponding to maximum running time at nominal conditions;
calculating the remaining lifetime (Nᵣₑₘ) of the encoder by subtracting the effective running time (N_{eff}) from the lifetime reference value (N_{ref}).

2. A method for operating an encoder system comprising the steps of:
determining (100) a value of a first encoder operational variable;
weighting (200) said value in dependence of at least one other operational variable of the encoder, influencing the lifetime of the encoder;
providing (300) a reference value of total encoder lifetime in respect of said first encoder operational variable;
calculating (400) the remaining lifetime of the encoder in respect of the first operational variable based on the weighted value and the reference value of total encoder lifetime wherein;
weighting values are predetermined for intervals of the operational variable influencing the lifetime of the encoder whereby, the weighting value for the operational variable in question corresponds to the interval in which a sampled value of the operational variable falls within;
whereby the remaining lifetime of several specific parts of the encoder system are calculated and the remaining lifetime of the encoder system is set to the remaining lifetime of the specific part which has the shortest remaining lifetime, **characterized in that**
operational variables influencing the lifetime of the encoder are sampled during measurement cycles that are continuously repeated, and
the calculation of remaining lifetime of an mechanical or electronic part of the encoder comprises the steps of:
sampling at least one value of angular velocity (v), one value of rotated distance (d) and a value of encoder temperature (T);
associating the sampled value of angular velocity with a predetermined velocity interval (Δv); corresponding to the sampled velocity value (v);
providing, based on said velocity interval, a velocity dependent weighting (K);
multiplying the sampled value of encoder distance (d) with the velocity dependent weighting value (K), thereby achieving a weighted distance value (dK);
associating the weighted distance value (dK) with a predetermined temperature interval (ΔT); corresponding to the sampled temperature value (T);
providing, based on said temperature interval, a temperature dependent weighting value (λ);
multiplying the weighted distance (dK) with the temperature dependent weighting value (Δ), thereby achieving the effective distance (N_{eff}) of the encoder;
providing a reference value (N_{ref}) of total lifetime of the encoder corresponding to maximum rotated distance at nominal conditions;
calculating the remaining lifetime (Nᵣₑₘ) of the encoder by subtracting the effective distance (N_{eff}) from the lifetime reference value (N_{ref}).

3. A method for operating an encoder system comprising the steps of:
determining (100) a value of a first encoder operational variable;
weighting (200) said value in dependence of at least one other operational variable of the encoder, influencing the lifetime of the encoder;
providing (300) a reference value of total encoder lifetime in respect of said first encoder operational variable;
calculating (400) the remaining lifetime of the encoder in respect of the first operational variable based on the weighted value and the reference value of total encoder lifetime wherein;
weighting values are predetermined for intervals of the operational variable influencing the lifetime of the encoder whereby, the weighting value for the operational variable in question corresponds to the interval in which a sampled value of the operational variable falls within;
whereby the remaining lifetime of several specific parts of the encoder system are calculated and the remaining lifetime of the encoder system is set to the remaining lifetime of the specific part which has the shortest remaining lifetime, **characterized in that**
operational variables influencing the lifetime of the encoder are sampled during measurement cycles that are continuously repeated, and
the calculation of remaining lifetime of a mechanical or electronic part of the encoder comprises the steps of:
sampling acceleration values (a₁, a₂, a₃, ..., aₙ) from an acceleration sensor disposed on the encoder at discrete times (t₁, t₂, t₃, ..., tₙ) of a time period (Δt);
determining a frequency spectrum (f₁, f₂, f₃, ..., fₙ) of the sampled acceleration values;
associating each frequency with a predetermined acceleration amplitude interval (Δa);
providing, based on the selected acceleration intervals acceleration amplitude dependent weighting values (α);
multiplying each frequency (f) of the spectrum with the corresponding acceleration amplitude dependent weighting value (α);
summing the weighted frequencies and multiplying the summed frequencies with the time period (Δt), thereby achieving the sum of stress cycles (Nᵢ) the encoder is subjected to;
associating the sampled temperature value with a predetermined a predetermined temperature interval (ΔT);
providing, based on the selected temperature interval a temperature dependent weighting value (λ);
multiplying the weighted frequency sum (Nᵢ) with the temperature dependent weighting value (λ), thereby achieving the effective amount of stress cycles (N_{eff}) of the encoder;
providing a reference value (N_{ref}) of total lifetime of the encoder corresponding to maximum stress cycles that the encoder may be subjected under nominal condition;
calculating the remaining lifetime (Nᵣₑₘ) of the encoder by subtracting the effective distance (N_{eff}) from the lifetime reference value (N_{ref}).

4. A method for operating an encoder system comprising the steps of:
determining (100) a value of a first encoder operational variable;
weighting (200) said value in dependence of at least one other operational variable of the encoder, influencing the lifetime of the encoder;
providing (300) a reference value of total encoder lifetime in respect of said first encoder operational variable;
calculating (400) the remaining lifetime of the encoder in respect of the first operational variable based on the weighted value and the reference value of total encoder lifetime wherein;
weighting values are predetermined for intervals of the operational variable influencing the lifetime of the encoder whereby, the weighting value for the operational variable in question corresponds to the interval in which a sampled value of the operational variable falls within;
whereby the remaining lifetime of several specific parts of the encoder system are calculated and the remaining lifetime of the encoder system is set to the remaining lifetime of the specific part which has the shortest remaining lifetime,
**characterized in that**
operational variables influencing the lifetime of the encoder are sampled during measurement cycles that are continuously repeated, and
the calculation of remaining lifetime of the detector unit of the encoder comprises the steps of:
sampling values of angular velocity (v₁, v₂, v₃,..., vₙ), values of diagnostic signal (si, s₂, s₃, ..., sₙ) and values of encoder temperature (T₁, T₂, T₃, ..., Tₙ) at discrete times (t₁, t₂, t₃, ..., tₙ) of the running time signal;
associating the sampled diagnostic value with a predetermined temperature interval (ΔT); corresponding to the sampled temperature value (T);
providing, based on the selected temperature interval, a temperature dependent weighting value (λ);
multiplying the sampled value of diagnostic signal (s) with the temperature dependent weighting value (λ), thereby achieving a weighted diagnostic signal value (sλ);
associating the weighted diagnostic signal value (sλ) with a predetermined velocity interval (Δv) corresponding to the sampled velocity value (v);
providing, based on the selected velocity interval, a velocity dependent weighting value (K);
multiplying each weighted diagnostic signal value (sλ) with the velocity dependent weighting value (K), thereby achieving effective diagnostic signal value (s');
calculating the remaining lifetime (Nᵣₑₘ) of the encoder by the rate that the effective diagnostic signal values (s') decrease to a predetermined level S_{c}.

## Patentansprüche

1. Verfahren zum Betreiben eines Encodersystems umfassend die folgenden Schritte:
Bestimmen (100) eines Werts einer ersten Encoderbetriebsvariable;
Gewichtung (200) des Werts in Abhängigkeit von mindestens einer anderen Betriebsvariable des Encoders, die die Lebensdauer des Encoders beeinflusst;
Bereitstellen (300) eines Referenzwerts der gesamten Encoder-Lebensdauer in Bezug auf die erste Encoderbetriebsvariable;
Berechnen (400) der verbleibenden Lebensdauer des Encoders in Bezug auf die erste Betriebsvariable basierend auf dem gewichteten Wert und dem Referenzwert der gesamten Encoder-Lebensdauer, wobei;
Gewichtswerte für Intervalle der Betriebsvariable, die die Lebensdauer des Encoders beeinflussen, vorgegeben werden, wobei der Gewichtswert für die betreffende Betriebsvariable dem Intervall entspricht, innerhalb welcher ein Abtastwert der Betriebsvariable liegt;
wodurch die verbleibende Lebensdauer von mehreren spezifischen Teilen des Encodersystems berechnet wird und die verbleibende Lebensdauer des Encodersystems auf die verbleibende Lebensdauer des spezifischen Teils, der die kürzeste verbleibende Lebensdauer aufweist, gesetzt wird,
**dadurch gekennzeichnet, dass**
Betriebsvariablen, die die Lebensdauer des Encoders beeinflussen, während kontinuierlich sich wiederholender Messzyklen abgetastet werden,
das Berechnen verbleibender Lebensdauer eines elektronischen Teils des Encoders die folgenden Schritte umfasst:
Abtasten eines Werts einer Encodertemperatur (T) und einer Zeitdauer (Δt);
Verknüpfen der Zeitdauer (Δt) mit einem vorgegebenen Temperaturintervall (ΔT); entsprechend dem abgetasteten Temperaturwert (T);
Bereitstellen, basierend auf dem vorgegebenen Temperaturintervall (ΔT), eines temperaturabhängigen Gewichtswerts (λ);
Multiplizieren der Zeitdauer (Δt) mit dem temperaturabhängigen Gewichtswert (λ), wodurch die effektive Laufzeit (N_{eff}) des Encoders erreicht wird;
Bereitstellen eines Referenzwerts (N_{ref}) der gesamten Lebensdauer des Encoders entsprechend maximaler Laufzeit unter Nennbedingungen;
Berechnen der verbleibenden Lebensdauer (Nᵣₑₘ) des Encoders durch Subtrahieren der effektiven Laufzeit (N_{eff}) von dem Lebensdauer-Referenzwert (N_{ref}).

2. Verfahren zum Betreiben eines Encodersystems umfassend die folgenden Schritte:
Bestimmen (100) eines Werts einer ersten Encoderbetriebsvariable;
Gewichtung (200) des Werts in Abhängigkeit von mindestens einer anderen Betriebsvariable des Encoders, die die Lebensdauer des Encoders beeinflusst;
Bereitstellen (300) eines Referenzwerts der gesamten Encoder-Lebensdauer in Bezug auf die erste Encoderbetriebsvariable;
Berechnen (400) der verbleibenden Lebensdauer des Encoders in Bezug auf die erste Betriebsvariable basierend auf dem gewichteten Wert und dem Referenzwert der gesamten Encoder-Lebensdauer, wobei;
Gewichtswerte für Intervalle der Betriebsvariable, die die Lebensdauer des Encoders beeinflussen, vorgegeben werden, wobei der Gewichtswert für die betreffende Betriebsvariable dem Intervall entspricht, innerhalb welcher ein Abtastwert der Betriebsvariable liegt;
wodurch die verbleibende Lebensdauer von mehreren spezifischen Teilen des Encodersystems berechnet wird und die verbleibende Lebensdauer des Encodersystems auf die verbleibende Lebensdauer des spezifischen Teils, der die kürzeste verbleibende Lebensdauer aufweist, gesetzt wird,
**dadurch gekennzeichnet, dass**
Betriebsvariablen, die die Lebensdauer des Encoders beeinflussen, während kontinuierlich sich wiederholender Messzyklen abgetastet werden, und
das Berechnen verbleibender Lebensdauer eines mechanischen oder elektronischen Teils des Encoders die folgenden Schritte umfasst:
Abtasten mindestens eines Winkelgeschwindigkeitswerts (v), eines Werts eines gedrehten Abstands (d) und eines Encodertemperaturwerts (T);
Verknüpfen des Winkelgeschwindigkeitsabtastwerts mit einem vorgegebenen Geschwindigkeitsintervall (Δv); entsprechend dem Geschwindigkeitsabtastwert (v);
Bereitstellen, basierend auf dem Geschwindigkeitsintervall, einer geschwindigkeitsabhängigen Gewichtung (K);
Multiplizieren des Abtastwerts eines Encoderabstands (d) mit dem geschwindigkeitsabhängigen Gewichtswert (K), wodurch ein gewichteter Abstandswert (dK) erreicht wird;
Verknüpfen des gewichteten Abstandswerts (dK) mit einem vorgegebenen Temperaturintervall (ΔT); entsprechend dem abgetasteten Temperaturwert (T);
Bereitstellen, basierend auf dem Temperaturintervall, eines temperaturabhängigen Gewichtswerts (λ);
Multiplizieren des gewichteten Abstands (dK) mit dem temperaturabhängigen Gewichtswert (Δ), wodurch der effektive Abstand (N_{eff}) des Encoders erreicht wird;
Bereitstellen eines Referenzwerts (N_{ref}) der gesamten Lebensdauer des Encoders entsprechend maximal gedrehtem Abstand unter Nennbedingungen;
Berechnen der verbleibenden Lebensdauer (Nᵣₑₘ) des Encoders durch Subtrahieren des effektiven Abstands (N_{eff}) von dem Lebensdauer-Referenzwert (N_{ref}).

3. Verfahren zum Betreiben eines Encodersystems umfassend die folgenden Schritte:
Bestimmen (100) eines Werts einer ersten Encoderbetriebsvariable;
Gewichtung (200) des Werts in Abhängigkeit von mindestens einer anderen Betriebsvariable des Encoders, die die Lebensdauer des Encoders beeinflusst;
Bereitstellen (300) eines Referenzwerts der gesamten Encoder-Lebensdauer in Bezug auf die erste Encoderbetriebsvariable;
Berechnen (400) der verbleibenden Lebensdauer des Encoders in Bezug auf die erste Betriebsvariable basierend auf dem gewichteten Wert und dem Referenzwert der gesamten Encoder-Lebensdauer, wobei;
Gewichtswerte für Intervalle der Betriebsvariable, die die Lebensdauer des Encoders beeinflussen, vorgegeben werden, wobei der Gewichtswert für die betreffende Betriebsvariable dem Intervall entspricht, innerhalb welcher ein Abtastwert der Betriebsvariable liegt;
wodurch die verbleibende Lebensdauer von mehreren spezifischen Teilen des Encodersystems berechnet wird und die verbleibende Lebensdauer des Encodersystems auf die verbleibende Lebensdauer des spezifischen Teils, der die kürzeste verbleibende Lebensdauer aufweist, gesetzt wird,
**dadurch gekennzeichnet, dass**
Betriebsvariablen, die die Lebensdauer des Encoders beeinflussen, während kontinuierlich sich wiederholender Messzyklen abgetastet werden, und
das Berechnen verbleibender Lebensdauer eines mechanischen oder elektronischen Teils des Encoders die folgenden Schritte umfasst:
Abtasten von Beschleunigungswerten (a₁, a₂, a₃, ..., aₙ) von einem an dem Encoder angeordneten Beschleunigungssensor zu bestimmten Zeiten (t₁, t₂, t₃, ..., tₙ) einer Zeitdauer (Δt);
Bestimmen eines Frequenzspektrums (f₁, f₂, f₃, ..., fₙ) der abgetasteten Beschleunigungswerte;
Verknüpfen jeder Frequenz mit einem vorgegebenen Beschleunigungsamplitudenintervall (Δa);
Bereitstellen, basierend auf den ausgewählten Beschleunigungsintervallen, von beschleunigungsamplitudenabhängigen Gewichtswerten (α);
Multiplizieren jeder Frequenz (f) des Spektrums mit dem entsprechenden beschleunigungsamplitudenabhängigen Gewichtswert (α);
Summieren der gewichteten Frequenzen und Multiplizieren der summierten Frequenzen mit der Zeitdauer (Δt), wodurch die Summe von Belastungszyklen (Nᵢ), denen der Encoder unterworfen ist, erreicht wird;
Verknüpfen des Temperaturabtastwerts mit einem vorgegebenen Temperaturintervall (ΔT);
Bereitstellen, basierend auf dem ausgewählten Temperaturintervall, eines temperaturabhängigen Gewichtswerts (λ);
Multiplizieren der gewichteten Frequenzsumme (Nᵢ) mit dem temperaturabhängigen Gewichtswert (λ), wodurch die effektive Anzahl von Belastungszyklen (N_{eff}) des Encoders erreicht wird;
Bereitstellen eines Referenzwerts (N_{ref}) der gesamten Lebensdauer des Encoders entsprechend maximalen Belastungszyklen, denen der Encoder unter Nennbedingungen unterworfen werden kann;
Berechnen der verbleibenden Lebensdauer (Nᵣₑₘ) des Encoders durch Subtrahieren des effektiven Abstands (N_{eff}) von dem Lebensdauer-Referenzwert (N_{ref}).

4. Verfahren zum Betreiben eines Encodersystems umfassend die folgenden Schritte:
Bestimmen (100) eines Werts einer ersten Encoderbetriebsvariable;
Gewichtung (200) des Werts in Abhängigkeit von mindestens einer anderen Betriebsvariable des Encoders, die die Lebensdauer des Encoders beeinflusst;
Bereitstellen (300) eines Referenzwerts der gesamten Encoder-Lebensdauer in Bezug auf die erste Encoderbetriebsvariable;
Berechnen (400) der verbleibenden Lebensdauer des Encoders in Bezug auf die erste Betriebsvariable basierend auf dem gewichteten Wert und dem Referenzwert der gesamten Encoder-Lebensdauer, wobei;
Gewichtswerte für Intervalle der Betriebsvariable, die die Lebensdauer des Encoders beeinflussen, vorgegeben werden, wobei der Gewichtswert für die betreffende Betriebsvariable dem Intervall entspricht, innerhalb welcher ein Abtastwert der Betriebsvariable liegt;
wodurch die verbleibende Lebensdauer von mehreren spezifischen Teilen des Encodersystems berechnet wird und die verbleibende Lebensdauer des Encodersystems auf die verbleibende Lebensdauer des spezifischen Teils, der die kürzeste verbleibende Lebensdauer aufweist, gesetzt wird,
**dadurch gekennzeichnet, dass**
Betriebsvariablen, die die Lebensdauer des Encoders beeinflussen, während kontinuierlich sich wiederholender Messzyklen abgetastet werden, und
das Berechnen verbleibender Lebensdauer der Detektoreinheit des Encoders die folgenden Schritte umfasst:
Abtasten von Winkelgeschwindigkeitswerten (v₁, v₂, v₃,..., vₙ), Werten eines diagnostischen Signals (s₁, s₂, s₃, ..., sₙ) und Encodertemperaturwerten (T₁, T₂, T₃, ..., Tₙ) zu bestimmten Zeiten (t₁, t₂, t₃, ..., tₙ) des Laufzeitsignals;
Verknüpfen des diagnostischen Abtastwerts mit einem vorgegebenen Temperaturintervall (ΔT); entsprechend dem abgetasteten Temperaturwert (T);
Bereitstellen, basierend auf dem ausgewählten Temperaturintervall, eines temperaturabhängigen Gewichtswerts (λ);
Multiplizieren des Abtastwerts des diagnostischen Signals (s) mit dem temperaturabhängigen Gewichtswert (λ), wodurch ein gewichteter diagnostischer Signalwert (sλ) erreicht wird;
Verknüpfen des gewichteten diagnostischen Signalwerts (sλ) mit einem vorgegebenen Geschwindigkeitsintervall (Δv) entsprechend dem Geschwindigkeitsabtastwert (v);
Bereitstellen, basierend auf dem ausgewählten Geschwindigkeitsintervall, eines geschwindigkeitsabhängigen Gewichtswerts (K);
Multiplizieren jedes gewichteten diagnostischen Signalwerts (sλ) mit dem geschwindigkeitsabhängigen Gewichtswert (K), wodurch ein effektiver diagnostischer Signalwert (s') erreicht wird;
Berechnen der verbleibenden Lebensdauer (Nᵣₑₘ) des Encoders durch die Geschwindigkeit, um welche die effektiven diagnostischen Signalwerte (s') auf ein vorgegebenes Niveau S_{c} fallen.

## Revendications

1. Procédé pour faire fonctionner un système de codeur comprenant les étapes consistant à :
déterminer (100) une valeur d'une première variable opérationnelle de codeur;
pondérer (200) ladite valeur en fonction d'au moins une autre variable opérationnelle du codeur, influençant la durée de vie du codeur ;
fournir (300) une valeur de référence de la durée de vie totale du codeur par rapport à ladite première variable opérationnelle de codeur ;
calculer (400) la durée de vie restante du codeur par rapport à la première variable opérationnelle sur la base de la valeur pondérée et de la valeur de référence de la durée de vie totale du codeur dans lequel,
des valeurs de pondération sont prédéterminées pour des intervalles de la variable opérationnelle influençant la durée de vie du codeur, la valeur de pondération pour la variable opérationnelle en question correspondant à l'intervalle dans lequel se situe une valeur échantillonnée de la variable opérationnelle ;
dans lequel la durée de vie restante de plusieurs parties spécifiques du système de codage est calculée, et la durée de vie restante du système de codage est fixée à la durée de vie restante de ladite partie spécifique ayant la durée de vie restante la plus courte,
**caractérisé en ce que**
des variables opérationnelles influençant la durée de vie du codeur sont échantillonnées lors des cycles de mesure qui sont répétés en continu,
le calcul de la durée de vie restante d'un composant électronique du codeur comprend les étapes consistant à :
échantillonner une valeur de température du codeur (T) et une période de temps (Δt) ;
associer la période de temps (Δt) à un intervalle de température prédéterminé (ΔT) ; correspondant à la valeur de température échantillonnée (T) ;
fournir, sur la base de l'intervalle de température prédéterminé (ΔT), une valeur de pondération en fonction de la température (λ) ;
multiplier la période de temps (Δt) par la valeur de pondération dépendante de la température (λ), obtenant ainsi le temps de fonctionnement effectif (Neff) du codeur ;
fournir une valeur de référence (Nref) de la durée de vie totale du codeur correspondant au temps de fonctionnement maximal à des conditions nominales ;
calculer la durée de vie restante (Nrem) du codeur en soustrayant le temps de fonctionnement effectif (Neff) de la valeur de référence de durée de vie (Neff).

2. Procédé pour faire fonctionner un système de codeur comprenant les étapes consistant à :
déterminer (100) une valeur d'une première variable opérationnelle de codeur ;
pondérer (200) ladite valeur en fonction d'au moins une autre variable opérationnelle du codeur, influençant la durée de vie du codeur ;
fournir (300) une valeur de référence de la durée de vie totale du codeur par rapport à ladite première variable opérationnelle de codeur ;
calculer (400) la durée de vie restante du codeur par rapport à la première variable opérationnelle sur la base de la valeur pondérée et de la valeur de référence de la durée de vie totale du codeur dans lequel,
des valeurs de pondération sont prédéterminées pour des intervalles de la variable opérationnelle influençant la durée de vie du codeur, la valeur de pondération pour la variable opérationnelle en question correspondant à l'intervalle dans lequel se situe une valeur échantillonnée de la variable opérationnelle ;
dans lequel la durée de vie restante de plusieurs parties spécifiques du système de codage est calculée, et la durée de vie restante du système de codage est fixée à la durée de vie restante de ladite partie spécifique ayant la durée de vie restante la plus courte,
**caractérisé en ce que**
des variables opérationnelles influençant la durée de vie du codeur sont échantillonnées lors des cycles de mesure qui sont répétés en continu, et
le calcul de la durée de vie restante d'une partie mécanique ou électronique du codeur comprend les étapes consistant à :
échantillonner au moins une valeur de vitesse angulaire (v), une valeur de distance de rotation (d) et une valeur de température de codeur (T) ;
associer la valeur échantillonnée de vitesse angulaire à un intervalle de vitesse prédéterminé (Δv) ; correspondant à la valeur de vitesse échantillonnée (v) ;
fournir, sur la base dudit intervalle de vitesse, une pondération dépendante de la vitesse (K) ;
multiplier la valeur échantillonnée de distance de codeur (d) par la valeur de pondération dépendante de la vitesse (K), obtenant ainsi une valeur de distance pondérée (dK) ;
associer la valeur de distance pondérée (dK) à un intervalle de température prédéterminé (ΔT) ; correspondant à la valeur de température échantillonnée (T) ;
fournir, sur la base dudit intervalle de température, une valeur de pondération dépendante de la température (λ) ;
multiplier la distance pondérée (dK) par la valeur de pondération dépendante de la température (Δ), obtenant ainsi la distance effective (N_{eff}) du codeur ;
fournir une valeur de référence (N_{ref}) de la durée de vie totale du codeur correspondant à la distance de rotation maximale à des conditions nominales;
calculer la durée de vie restante (Nᵣₑₘ) du codeur en soustrayant la distance effective (N_{eff}) à partir de la valeur de référence de durée de vie (N_{ref}).

3. Procédé pour faire fonctionner un système de codeur comprenant les étapes consistant à :
déterminer (100) une valeur d'une première variable opérationnelle de codeur ;
pondérer (200) ladite valeur en fonction d'au moins une autre variable opérationnelle du codeur, influençant la durée de vie du codeur ;
fournir (300) une valeur de référence de la durée de vie totale du codeur par rapport à ladite première variable opérationnelle de codeur ;
calculer (400) la durée de vie restante du codeur par rapport à la première variable opérationnelle sur la base de la valeur pondérée et de la valeur de référence de la durée de vie totale du codeur dans lequel,
des valeurs de pondération sont prédéterminées pour des intervalles de la variable opérationnelle influençant la durée de vie du codeur, la valeur de pondération pour la variable opérationnelle en question correspondant à l'intervalle dans lequel se situe une valeur échantillonnée de la variable opérationnelle ;
dans lequel la durée de vie restante de plusieurs parties spécifiques du système de codage est calculée, et la durée de vie restante du système de codage est fixée à la durée de vie restante de ladite partie spécifique ayant la durée de vie restante la plus courte,
**caractérisé en ce que**
des variables opérationnelles influençant la durée de vie du codeur sont échantillonnées lors des cycles de mesure qui sont répétés en continu, et
le calcul de la durée de vie restante d'une partie mécanique ou électronique du codeur comprend les étapes consistant à :
échantillonner des valeurs d'accélération (a₁, a₂, a₃, ..., aₙ) d'un capteur d'accélération disposé sur le codeur à des instants discrets (t₁, t₂ , t₃, ..., tₙ) d'une période de temps (Δt) ;
déterminer un spectre de fréquences (f₁, f₂, f₃, ..., fₙ) des valeurs d'accélération échantillonnées ;
associer chaque fréquence à un intervalle d'amplitude d'accélération prédéterminé (Δa) ;
fournir, sur la base des intervalles d'accélération sélectionnés, des valeurs de pondération dépendant de l'amplitude de l'accélération (α) ;
multiplier chaque fréquence (f) du spectre par la valeur de pondération (α) dépendante de l'amplitude d'accélération correspondante (α) ;
additionner les fréquences pondérées et multiplier les fréquences additionnées avec la période de temps (Δt), obtenant ainsi la somme des cycles de contraintes (Nᵢ) auxquels le codeur est soumis ;
associer la valeur de température échantillonnée à un intervalle de température prédéterminé (ΔT) ;
fournir, sur la base de l'intervalle de température sélectionné, une valeur de pondération dépendante de la température (λ) ;
multiplier la somme de fréquence pondérée (Nᵢ) par la valeur de pondération dépendante de la température (λ), obtenant ainsi la quantité efficace de cycles de contrainte (N_{eff}) du codeur ;
fournir une valeur de référence (N_{ref}) de la durée de vie totale du codeur correspondant aux cycles de contraintes maximales auxquels le codeur peut être soumis sous des conditions nominales ;
calculer la durée de vie restante (Nᵣₑₘ) du codeur en soustrayant la distance effective (N_{eff}) à partir de la valeur de référence de durée de vie (N_{ref}).

4. Procédé pour faire fonctionner un système de codeur comprenant les étapes consistant à :
déterminer (100) une valeur d'une première variable opérationnelle de codeur ;
pondérer (200) ladite valeur en fonction d'au moins une autre variable opérationnelle du codeur, influençant la durée de vie du codeur ;
fournir (300) une valeur de référence de la durée de vie totale du codeur par rapport à ladite première variable opérationnelle de codeur ;
calculer (400) la durée de vie restante du codeur par rapport à la première variable opérationnelle sur la base de la valeur pondérée et de la valeur de référence de la durée de vie totale du codeur dans lequel,
des valeurs de pondération sont prédéterminées pour des intervalles de la variable opérationnelle influençant la durée de vie du codeur, la valeur de pondération pour la variable opérationnelle en question correspondant à l'intervalle dans lequel se situe une valeur échantillonnée de la variable opérationnelle ;
dans lequel la durée de vie restante de plusieurs parties spécifiques du système de codage est calculée, et la durée de vie restante du système de codage est fixée à la durée de vie restante de ladite partie spécifique ayant la durée de vie restante la plus courte,
**caractérisé en ce que**
des variables opérationnelles influençant la durée de vie du codeur sont échantillonnées lors des cycles de mesure qui sont répétés en continu, et
le calcul de la durée de vie restante de l'unité de détection du codeur comprend les étapes consistant à :
échantillonner des valeurs de vitesse angulaire (v₁, v₂, v₃,..., vₙ), des valeurs du signal de diagnostic (s₁, s₂, s₃, ..., sₙ) et des valeurs de température du codeur (T₁, T₂, T₃, ..., Tₙ) aux instants discrets (t₁, t₂, t₃, ..., tₙ) du signal de temps de fonctionnement ;
associer la valeur de diagnostic échantillonnée à un intervalle de température prédéterminé (ΔT) ; correspondant à la valeur de température échantillonnée (T) ;
fournir, sur la base de l'intervalle de température sélectionné, une valeur de pondération dépendante de la température (λ) ;
multiplier la valeur échantillonnée de signal de diagnostic (2) par la valeur de pondération dépendante de la température (λ), obtenant ainsi une valeur de signal de diagnostic pondérée (sλ) ;
associer la valeur pondérée de signal de diagnostic (sλ) à un intervalle de vitesse prédéterminé (Δv) correspondant à la valeur de vitesse échantillonnée (v) ;
fournir, sur la base de l'intervalle de vitesse sélectionné, une valeur de pondération dépendante de la vitesse (K) ;
multiplier chaque valeur de signal de diagnostic pondérée (sλ) par la valeur de pondération dépendante de la vitesse (K), obtenant ainsi une valeur de signal de diagnostic efficace (s') ;
calculer la durée de vie restante (Nᵣₑₘ) du codeur par le taux auquel les valeurs effectives du signal de diagnostic (s') diminuent jusqu'à un niveau prédéterminé S_{c}.
